# EUROPÄISCHE PATENTANMELDUNG

(11) **EP 2 228 551 A2**
(43) Veröffentlichungstag der Anmeldung: **15.09.2010**
(21) Anmeldenummer: 10154517.6
(22) Anmeldetag: 24.02.2010
(51) Int. Cl.: F16B 25/10

(54) **Selbstbohrschraube**

(30) Priorität: 03.03.2009 DE 102009001298
(71) Anmelder: HILTI Aktiengesellschaft, 9494 Schaan (LI)
(72) Erfinder: Baumgartner, Michael, 9462, Montlingen (CH); Loichinger, Albert, 9468, Sax (CH)

(57) **Zusammenfassung**

Gegenstand der vorliegenden Erfindung ist eine Selbstbohrschraube (10) mit einem wenigstens bereichsweise ein Gewinde (13) tragenden Schaft (11), der eine Längsachse (L) definiert und an dessen erstem Ende eine Bohrspitze (12) mit einer maximalen Breite (B) und an dessen gegenüberliegenden zweiten Ende ein Kopf (15) angeordnet ist, sowie mit wenigstens einer ersten Schneide (21) und mit wenigstens einer zweiten Schneide (22). Zwischen den beiden Schneiden (21, 22) ist dabei eine von der Längsachse (L) durchsetzte Ausnehmung (18) angeordnet, deren minimale axiale Tiefe (M) wenigstens dem 0,1-fachen der maximalen Breite (B) der Bohrspitze (12) entspricht.

## Beschreibung

Die vorliegende Erfindung betrifft eine Selbstbohrschraube der im Oberbegriff von Patentanspruch 1 genannten Art. Derartige Selbstbohrschrauben werden insbesondere zur Verschraubung von Metallblechen an Trägern genutzt.

Aus der DE 25 51 510 A1 ist eine Selbstbohrschraube mit einem Kopf und einem sich daran anschliessenden Schaft bekannt, der an seinem dem Kopf abgewandten Ende eine Bohrspitze mit einer erste Schneide und mit einer zweiten Schneide aufweist. Im Bereich der Spitze der Selbstbohrschraube verläuft zwischen den beiden Schneiden eine Kante, die eine Längsachse der Selbstbohrschraube kreuzt.

Von Nachteil bei einer derartigen Selbstbohrschraube ist, dass die Schnittgeschwindigkeit im Zentrum des Bohrlochs gegen Null geht, da an der Kante eine nur sehr ineffektive Zerspanung stattfindet.

Aus der EP 0 468 089 B1 ist eine Bohrschraube bekannt, die an ihrem dem Kopf abgewandten Ende eine Bohrspitze aufweist, die im Endbereich zwei Spitzen aufweist. Jeweils nach radial aussen hin gehen von diesen Spitzen gekrümmte Schneiden ab. Zwischen beiden Spitzen erstreckt sich ferner noch eine Meisselschneide.

Die Zerspanung im axialen Bereich der Bohrspitze ist bei dieser Bohrschraube etwas effektiver, als bei der vorhergehend beschriebenen. Von Nachteil bei dieser Bohrschraube sind jedoch die beiden empfindlichen Spitzen, die sehr hohen Belastungen ausgesetzt sind. Ferner ist diese Geometrie umformtechnisch nur sehr aufwändig zu verwirklichen und ist daher teuer in der Herstellung.

Die Aufgabe der vorliegenden Erfindung liegt darin, die oben genannten Nachteile zu vermeiden und eine Selbstbohrschraube bereitzustellen, mit der auch im axialen Spitzenbereich ein effektiver Materialabbau möglich ist.

Die gestellte Aufgabe wird durch eine Selbstbohrschraube mit den in Patentanspruch 1 angegebenen Merkmalen erreicht. Demnach ist zwischen den beiden Schneiden eine von der Längsachse durchsetzte Ausnehmung angeordnet, deren minimale axiale Tiefe wenigstens dem 0,08-fachen der maximalen Breite der Bohrspitze entspricht. Durch die erfindungsgemässe Spitzengeometrie verbleibt beim Bohren im axialen Bereich des Bohrers ein Bohrkern, der stückweise vom Bohrgrund abgebrochen wird und damit als grösseres Teil (im Vergleich zu den sonst üblichen Spänen) aus dem Bohrloch heraustransportiert wird. Die Abtragsleistung der Bohrspitze der Selbstbohrschraube und damit deren Bohrgeschwindigkeit sind dadurch deutlich verbessert.

Vorteilhaft entspricht die minimale axiale Tiefe der Ausnehmung dem 0,1- bis 4-fachen der maximalen Breite der Bohrspitze, wodurch eine optimale Auslegung der Kernlänge bis zum Bruch des Kerns erzielt wird.

Von Vorteil ist es ferner, wenn ein in axialer Richtung liegender Boden der Ausnehmung als zu einer Seite hin schräg verlaufende Rampe ausgebildet ist. Durch die Rampe bzw. Auflaufschräge am Boden der Ausnehmung wird das Abbrechen des Kerns erleichtert und damit der Bohrfortschritt verbessert.

Günstig ist es auch, wenn die Ausnehmung schlitzförmig ausgebildet ist und zu wenigstens einem, seitlich an der Bohrspitze verlaufenden Spankanal hin offen ausgebildet ist. Durch die schlitzförmige Ausbildung ist die Ausnehmung leicht herstellbar und durch die Öffnung zu wenigstens einem Spankanal hin ist eine leichte Abfuhr des abgebrochenen Bohrkerns möglich.

Vorzugsweise entspricht eine Breite der Ausnehmung in einer Richtung parallel zum radialen Verlauf der Schneiden dem 0,1 bis 0,6 fachen der maximalen Breite der Bohrspitze, wodurch eine optimale Auslegung zwischen radialer Länge der Schneiden (und damit deren Bruchfestigkeit) und der Abtragsfähigkeit für den in der Ausnehmung aufgenommen Bohrkern erreicht wird.

In den Zeichnungen ist die Erfindung in einem Ausführungsbeispiel dargestellt.

Es zeigen:
Fig. 1 eine erfindungsgemässe Selbstbohrschraube,
Fig. 2 ein Detail der Selbstbohrschraube gemäss der Markierung II aus Fig. 1,
Fig. 3 das Detail der Selbstbohrschraube aus Fig. 2 in einer Ansicht in Richtung des Pfeils III aus Fig. 2,
Fig. 4 das Detail der Selbstbohrschraube aus Fig. 2 in einem Werkstück.

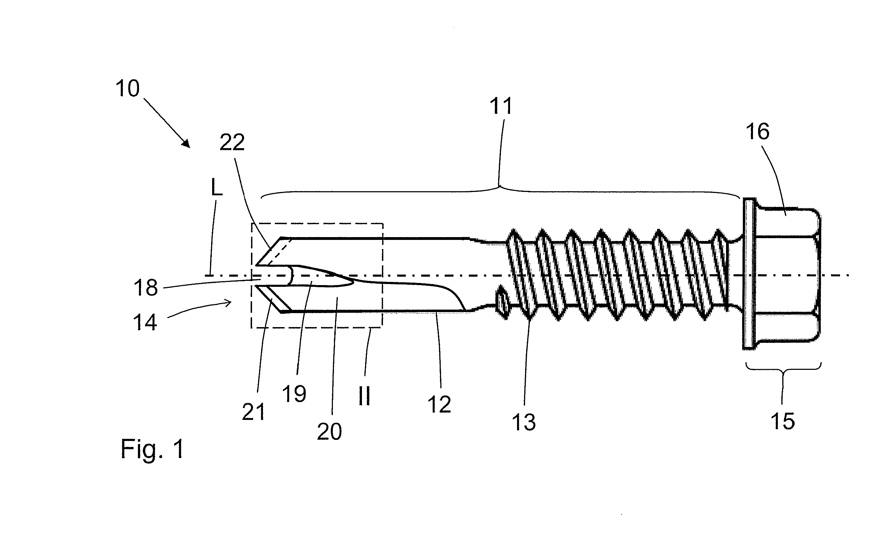

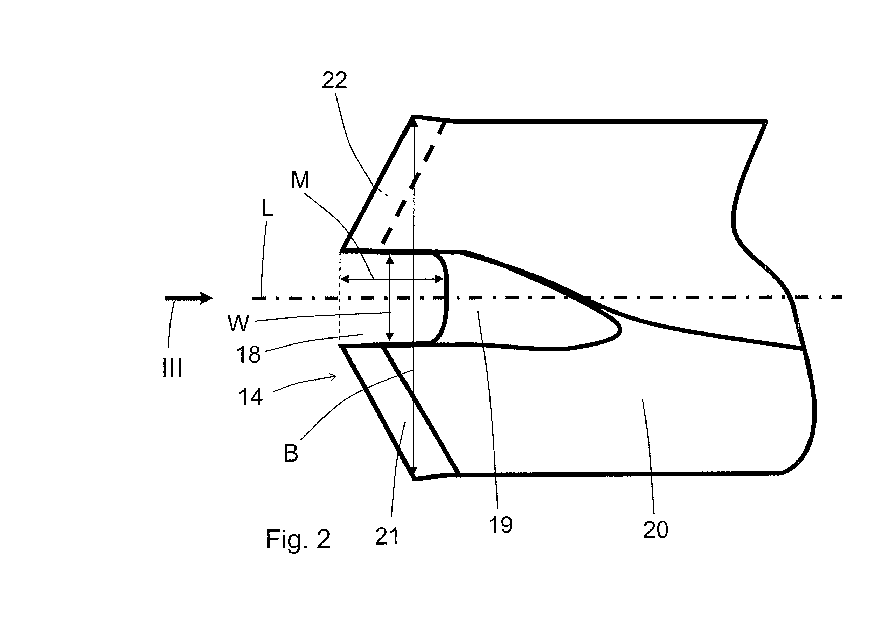

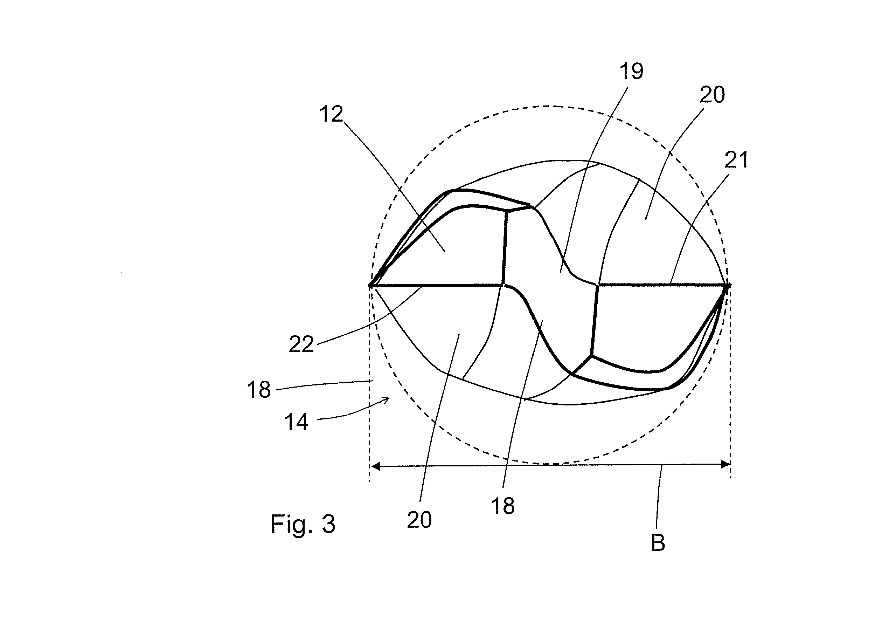

Die in den Figuren 1 bis 4 dargestellte Selbstbohrschraube 10 weist einen ein Gewinde 13 tragenden Schaft 11 auf, an dessen einem Endbereich eine Bohrspitze 12 und an dessen gegenüberliegenden anderen Ende ein Kopf 15 angeordnet ist. Eine Längsachse L der Selbstbohrschraube 10 definiert dabei eine axiale Richtung der Selbstbohrschraube 10. Der Kopf 15 weist ein als Mehrkant ausgebildetes Drehmitnahmemittel 16 für ein Schraubwerkzeug, wie einen Schrauberbit oder einen Schraubenschlüssel auf.

Die Bohrspitze 12 weist an ihrem dem Kopf 15 abgewandten freien Ende 14 eine erste Schneide 21 und eine zweite Schneide 22 auf, an die sich jeweils ein Spankanal 20 anschliesst. Ferner weist die Bohrspitze 12 im Bereich der Schneiden 21, 22 eine maximale Breite B auf, die etwas grösser (z. B. bis zu 0,2 mm grösser) ist als der durchschnittliche Durchmesser bzw. die durchschnittliche Breite der Bohrspitze 12. Alternativ kann die Breite B im Bereich der Schneiden 21, 22 auch gleich gross sein, wie der durchschnittliche Durchmesser bzw. die durchschnittliche Breite der Bohrspitze 12.

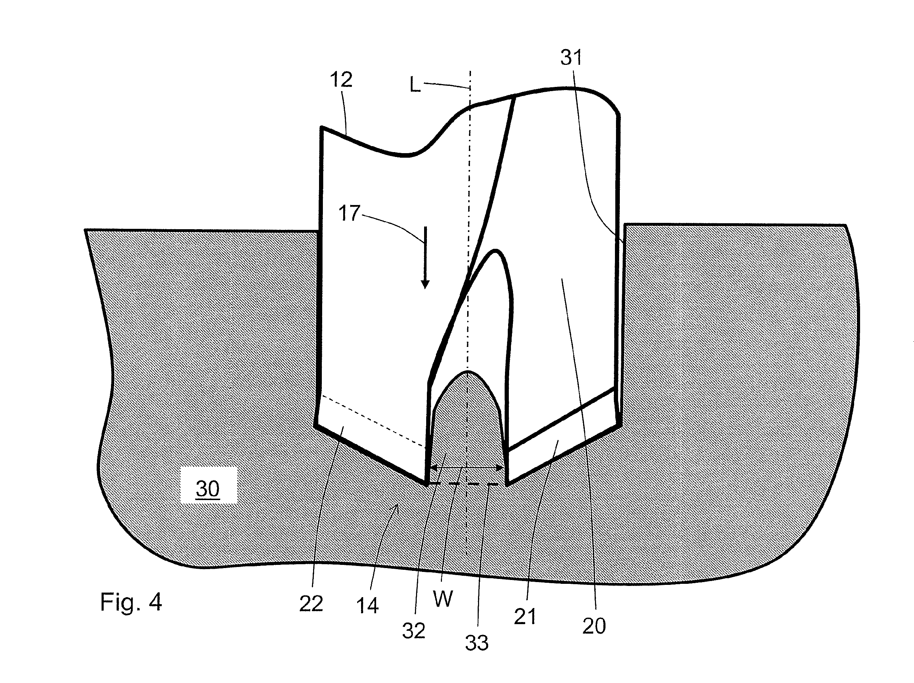

Im Bereich der Längsachse L ist eine vom freien Ende 14 ausgehende Ausnehmung 18 an der Bohrspitze 12 angeordnet. Diese Ausnehmung 18 ist schlitzförmig ausgebildet und ist zu beiden Spankanälen 20 hin offen. Die Ausnehmung 18 erstreckt sich entlang der Längsachse L und beabstandet die erste Schneide 21 und die zweite Schneide 22 voneinander. Die Längsachse L durchläuft die Ausnehmung 18 vorzugsweise mittig, so dass sich eine vorteilhafte Rotationssymmetrie der Ausnehmung 18 in Bezug auf die Längsachse L ergibt. Der in axialer Richtung liegende Boden der Ausnehmung 18 ist als zu einer Seite bzw. zu einem Spankanal 20 hin schräg verlaufende Rampe 19 ausgebildet. Die minimale axiale Tiefe M der Ausnehmung, welche zwischen der axialen Öffnung der Ausnehmung 18 und dem in Einschraubrichtung 17 (siehe Fig. 4) liegenden Ende der Rampe 19 gemessen wird, entspricht wenigstens dem 0,08-fachen, vorzugsweise dem 0,1- bis 4-fachen der maximalen Breite B der Bohrspitze 12. Eine Breite W der Ausnehmung 18 in einer Richtung parallel zum radialen Verlauf der Schneiden 21, 22 entspricht dem 0,1 bis 0,6 fachen der maximalen Breite B der Bohrspitze 12.

In Fig. 4 ist die Bohrspitze 12 der Selbstbohrschraube 10 bei einem Anbohrvorgang in ein Werkstück 30, wie z. B. einem Stahlträger, unter Ausformung eines Bohrlochs 31 eingedrungen. Wie ersichtlich, bleibt zentrisch im Bohrloch 31 ein säulenförmiger Kern 32 stehen, der sich in die Ausnehmung 18 hinein erstreckt. Wenn der säulenförmige Kern 32 sich beim weiteren Bohrfortschritt bis zur schrägen Rampe 19 erstreckt, wird er durch diese Rampe 19 seitlich weggedrückt und dabei an einer Bruchkante 33 vom Werkstück 30 getrennt (z. B. abgebrochen).

Zur Reibungsverminderung kann die Selbstbohrschraube wenigstens im Bereich des Schaftes 11 noch mit einer reibungsmindernden Beschichtung, wie z. B. einem Wachs oder Öl, ausgerüstet sein.

Es versteht sich, dass anstelle der hier dargestellten zwei Schneiden 21, 22 auch mehr, z. B. drei oder vier, Schneiden vorgesehen sein könnten.

## Patentansprüche

1. Selbstbohrschraube (10) mit einem wenigstens bereichsweise ein Gewinde (13) tragenden Schaft (11), der eine Längsachse (L) definiert und an dessen erstem Ende eine Bohrspitze (12) mit einer maximalen Breite (B) und an dessen gegenüberliegenden zweiten Ende ein Kopf (15) angeordnet ist, sowie mit wenigstens einer ersten Schneide (21) und mit wenigstens einer zweiten Schneide (22),
**dadurch gekennzeichnet,**
**dass** zwischen den beiden Schneiden (21, 22) eine von der Längsachse (L) durchsetzte Ausnehmung (18) angeordnet ist, deren minimale axiale Tiefe (M) wenigstens dem 0,08-fachen der maximalen Breite (B) der Bohrspitze (12) entspricht.

2. Selbstbohrschraube nach Anspruch 1, **dadurch gekennzeichnet, dass** die minimale axiale Tiefe (M) dem 0,1- bis 4-fachen der maximalen Breite (B) der Bohrspitze (12) entspricht.

3. Selbstbohrschraube nach Anspruch 1 oder 2, **dadurch gekennzeichnet, dass** ein in axialer Richtung liegender Boden der Ausnehmung (18) als zu einer Seite hin schräg verlaufende Rampe (19) ausgebildet ist.

4. Selbstbohrschraube nach einem der Ansprüche 1 bis 4, **dadurch gekennzeichnet, dass** die Ausnehmung (18) schlitzförmig ist und zu wenigstens einem, seitlich an der Bohrspitze (12) verlaufenden Spankanal (20) hin offen ausgebildet ist.

5. Selbstbohrschraube nach einem der Ansprüche 1 bis 5, **dadurch gekennzeichnet, dass** eine Breite (W) der Ausnehmung (18) in einer Richtung parallel zum radialen Verlauf der Schneiden (21, 22) dem 0,1 bis 0,6 fachen der maximalen Breite (B) der Bohrspitze (12) entspricht.
